# EUROPÄISCHE PATENTANMELDUNG

(11) **EP 0 677 963 A2**
(43) Veröffentlichungstag der Anmeldung: **18.10.1995**
(21) Anmeldenummer: 95105482.4
(22) Anmeldetag: 12.04.1995
(51) Int. Cl.: H04N 7/20

(54) **Anordnung zur Kanalumsetzung**

(30) Priorität: 12.04.1994 DE 4413189
(71) Anmelder: Grömminger, Freddy, D-78333 Stockach (DE); Hilser, Xaver, D-78144 Tennenbronn (DE); Büchner, Klaus, D-75438 Knittlingen-Freudenstein (DE)
(72) Erfinder: Grömminger, Freddy, D-78333 Stockach (DE); Hilser, Xaver, D-78144 Tennenbronn (DE); Büchner, Klaus, D-75438 Knittlingen-Freudenstein (DE)

(57) **Zusammenfassung**

Die Erfindung betrifft eine Anordnung zur Kanalumsetzung von mit einer Empfangsanlage für von mindestens einem Satelliten empfangenen und in Satelliten-Zwischenfrequenzen (ZF-Lage) umgesetzten Frequenzbereichen.

Es ist vorgesehen, daß jede beliebige empfangene Eingangs-Kanalfrequenz (ZF-Frequenz) ohne Änderung ihrer Modulationsart auf jede beliebige Ausgangs-Kanalfrequenz transponierbar ist.

## Beschreibung

Die Erfindung betrifft eine Anordnung zur Kanalumsetzung von mit einer Empfangsanlage von mindestens einem Satelliten empfangenen und in Satelliten-Zwischenfrequenzen umgesetzten Frequenzbereichen.

Es ist bekannt, bei Satellitengemeinschaftsempfangsanlagen zum Empfang diverser Fernsehprogramme, Rundfunkprogramme oder auch anderer Informationen sogenannte Kopfstationen einzusetzen, die die von den Satelliten abgestrahlten und von einem Außenkonverter in die ZF-Lage (Satelliten-Zwischenfrequenzen) umgesetzten Kanälen in dem beispielsweise vom Fernseher genutzten Frequenzbereich umzusetzen, wobei gleichzeitig eine Wandlung der Modulationsart von frequenzmoduliert auf amplitudenmoduliert erfolgt. Mit der Änderung der Modulationsart ist ein Informationsverlust der übertragenen Signale gegenüber den ZF-Frequenzen verbunden, der insbesondere bei einer Datenübertragung, vor allem einer Übertragung von komprimierten Daten, zu einer Signalverfälschung und damit zu einem Informationsverlust führen kann.

Der Erfindung liegt daher die Aufgabe zugrunde, eine Anordnung der gattungsgemäßen Art zu schaffen, mit der eine Kanalumsetzung der empfangenen ZF-Frequenzen ohne Informationsverlust durchgeführt werden kann.

Erfindungsgemäß wird diese Aufgabe durch die im Anspruch 1 angegebenen Merkmale gelöst. Dadurch, daß jede beliebige empfangene ZF-Frequenz (Eingangs-Kanalfrequenz) ohne Änderung ihrer Modulationsart auf jede beliebige Ausgangs-Kanalfrequenz transponierbar ist, ist es vorteilhaft möglich, aus einer Vielzahl gleichzeitig empfangener Eingangs-Kanalfrequenzen, die von der Anordnung Zur Kanalumsetzung selektiv empfangen werden, eine auszuwählen und diese in eine neue Ausgangs-Kanalfrequenz umzusetzen, so daß quasi eine Neuordnung einer Kanalzuteilung erfolgen kann, wobei die Modulationsart nicht gewechselt wird, das heißt, ein beispielsweise frequenzmoduliertes Eingangssignal in ein frequenzmoduliertes Ausgangssignal umgesetzt wird. Hierdurch wird eine frequenzmäßige Neuordnung dar von einem oder mehreren Satelliten empfangenen Kanäle (Farnsehprogramme, Rundfunkprogrsmme, Datenübertragung) entsprechend den Anforderungen der an der Anordnung angeschlossenen Teilnehmer möglich. Insbesondere ist es möglich, von mehreren Satelliten empfangene Eingangs-Kanalfrequenzen, die möglicherweise zunächst in gleicher bzw. fast gleicher Frequenz vorliegen, durch die Anordnung so umzusetzen, daß die Ausgangs-Kanalfrequenzen für alle beliebig eingespeisten Eingangs-Kanalfrequenzen systematisch getrennt und auseinandergehalten werden können.

In vorteilhafter Ausgestaltung der Erfindung ist vorgesehen, daß die Kanalumsetzer eine mit einer zentralen Steuerung verbundene Steuerschaltung aufweisen, die eine Auswahleinrichtung für die Eingangs-Kanalfrequenz und eine Auswahleinrichtung für die Ausgangs-Kanalfrequenz aufweist. Hierdurch wird es vorteilhaft möglich, jedem Kanalumsetzer eine beliebige Eingangs-Kanalfrequenz zuzuordnen, die aus den von dem wenigstens einen Satelliten bereitgestellten Eingangs-Kanalfrequenzen auswählbar ist und diese auf eine wählbare Ausgangs-Kanalfrequenz umzusetzen. Somit können alle über die Satellitenempfangsanlage von wenigstens einem Satelliten empfangenen Eingangs-Kanalfrequenzen über die zentrale Steuerung ausgewählt, einem bestimmten Kanalumsetzer zugeordnet und in eine bestimmte Ausgangs-Kanalfrequenz umgesetzt werden. Die Auswahl der Eingangs-Kanalfrequenz und der Ausgangs-Kanalfrequenz kann dabei beliebig entsprechend den Bedürfnissen der angeschlossenen Teilnehmer erfolgen. Hiermit sind insbesondere auch derartige Konstellationen denkbar, daß eine Eingangs-Kanalfrequenz auf mehrere Kanalumsetzer gleichzeitig geschaltet wird und die gleiche Eingangs-Kanalfrequenz auf unterschiedliche Ausgangs-Kanalfrequenzen transponiert wird. Den einzelnen Kombinationsmöglichkeiten sind dabei keine Grenzen gesetzt, und diese sind lediglich von der Anzahl der zur Verfügung stehenden Kanalumsetzer abhängig.

In weiterer bevorzugter Ausgestaltung der Erfindung ist vorgesehen, daß die über die zentrale Steuerung eingestellte Auswahl der Eingangs-Kanalfrequenzen und der Ausgangs-Kanalfrequenzen einprogrammierbar ist, wobei vorzugsweise eine selbsttätige Überprüfung der Einprogrammierung in einem wählbaren, festgelegten Zyklus erfolgen kann. Hierdurch wird es vorteilhaft möglich, durch eine einmal vorgenommene Einprogrammierung die gesamte Anordnung zur Kanalumsetzung in einem autarken Betrieb zu betreiben, so daß äußere Störeinflüsse auf die Anordnung, beispielsweise Spannungsausfall oder Ausfall einzelner Eingangs-Kanalfrequenzen, zu keiner Änderung der Einstellungen der Auswahleinrichtungen führen. Durch die Programmierbarkeit der Auswahleinrichtungen wird es auch in einfacher Weise möglich, bei beispielsweise einer Neuzuordnung von Eingangs-Kanalfrequenzen zu neuen Programmen, Dateninformationen oder ähnlichem bei Bedarf eine entsprechende Umprogrammierung in einfacher Weise vornehmen zu können.

Weitere vorteilhafte Ausgestaltungen der Erfindung ergeben sich aus den übrigen in den Unteransprüchen genannten Merkmalen.

Die Erfindung wird nachfolgend in Ausführungsbeispielen anhand der zugehörigen Zeichnungen näher erläutert. Es zeigen:
- Figur 1: schematisch eine Gesamtübersicht einer Anordnung zur Kanalumsetzung;
- Figur 2: schematisch eine Gruppe von Kanalumsetzern;
- Figur 3: ein Blockschaltbild eines Kanalumsetzers und
- Figur 4: schematisch ein Blockschaltbild einer Steuerung der in Figur 1 gezeigten Anordnung.

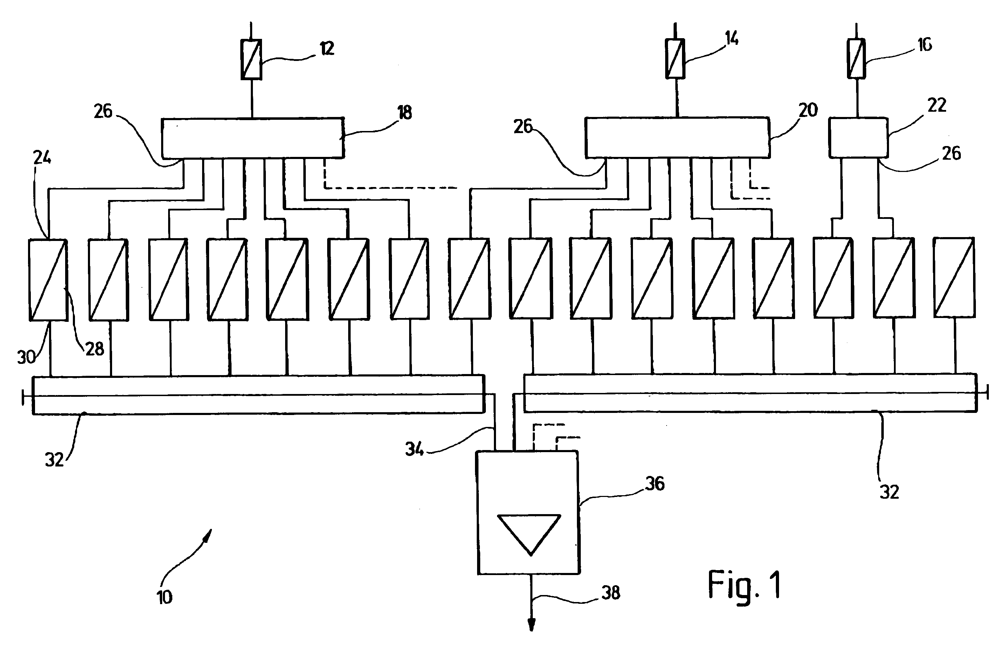

Figur 1 zeigt schematisch eine allgemein mit 10 bezeichnete Anlage zur Kanalumsetzung von mit einer Empfangsanlage von Satelliten empfangenen und in die ZF-Lage umgesetzten Frequenzen. Die Anlage 10 kann in einem, in Figur 1 nicht dargestellten, gemeinsamen Gehäuse angeordnet sein. Der Anlage 10 ist eine erste Empfangseinrichtung 12, eine zweite Empfangseinrichtung 14 und eine dritte Empfangseinrichtung 16 zugeordnet. Die Empfangseinrichtungen 12, 14 und 16 können jeweils die von einem Satelliten abgestrahlten Frequenzen empfangen unsd in die ZF-Lage umsetzen. Die Empfangseinrichtung 12 kann beispielsweise dem Astra-Satelliten horizontal, die Empfangseinrichtung 14 dem Astra-Satelliten vertikal und die Empfangseinrichtung 16 beispielsweise dem Kopernikus-Satelliten vertikal zugeordnet sein. Jeder dieser hier nicht dargestellten Satelliten strahlt eine bestimmte Anzahl von Kanälen ab, wobei hier unter Kanal im weiteren ein bestimmtes Fernsehprogramm beziehungsweise mehrere komprimierte Fernsehprogramme auf einen Transponder, ein bestimmtes Hörfunkprogramm, eine bestimmte Datenübertragung oder ähnliches verstanden wird. Jedem Kanal ist dabei eine bestimmte Frequenz mit entsprechender Bandbreite zugeteilt. Jeder der Empfangseinrichtungen 12, 14 und 16 ist ein Eingangsverteiler 18, 20 bzw. 22 zugeordnet. Die Eingangsverteiler splitten die an ihren Eingängen anliegenden ZF-Frequenzsignale in die Anzahl vorhandener Kanalumsetzer 28 auf, so daß an den Ausgängen 26 der Eingangsverteiler pro Ausgang jeweils das gesamte Frequenzspektrum anliegt. Die Anzahl der einzelnen von einem Satelliten zu empfangenden Kanäle richtet sich ausschließlich nach der Anzahl der von den Satelliten abgestrahlten Kanäle und kann entsprechend den technischen Möglichkeiten ständig erweitert werden. Jeder Ausgang 26 der Eingangsverteiler 18, 20 bzw. 22 ist mit einem Eingang 24 eines Kanalumsetzers 28 verbunden. Somit weist die Anlage 10 insgesamt eine der Anzahl der von den Satelliten empfangenen Kanäle entsprechende Anzahl von Kanalumsetzern 28 auf. Die Kanalumsetzer 28 sind mit ihren Ausgängen 30 mit wenigstens einem Sammelfeld 32 verbunden. In jedem der Sammelfelder 32 worden die Ausgänge 30 der einzelnen Kanalumsetzer 28 auf eine hier angedeutete Sammelleitung 34 zusammengeschaltet. Die Sammelleitungen 34 entsprechend der Anzahl der angeordneten Sammelfelder 32 sind auf eine Verstärkerstufe 36 geschaltet. Von der Verstärkerstufe 36 geht ein hier mit 38 angedeutetes Verteilernetz zu den an die Anlage 10 angeschlossenen Teilnehmern. Das Verteilernetz 38 kann in Baumstruktur mit einzelnen Abzweigern zu den Teilnehmern oder auch in Sternstruktur geschaltet sein.

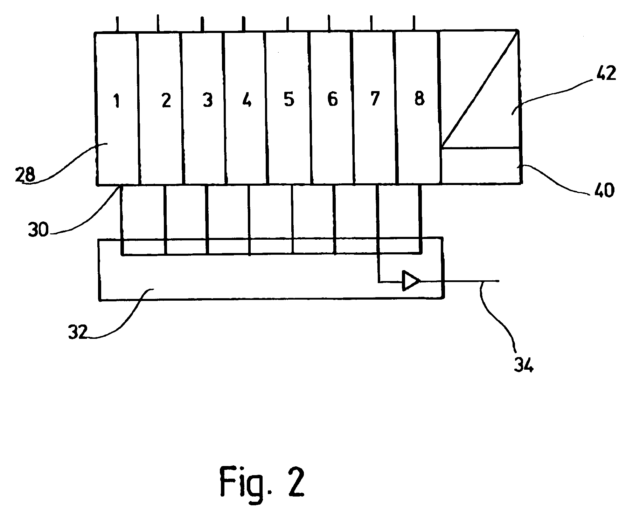

In der Figur 2 ist eine Gruppe von Kanalumsetzern 28 gezeigt, die beispielsweise alle einer bestimmten Empfangseinrichtung 12, 14 oder 16 eines Eingangsverteilers 18, 20 oder 22 zugeordnet sind. Es wird deutlich, daß den Kanalumsetzern 28 ein gemeinsames Netzteil 40 und eine gemeinsame zentrale Steuerung 42 zugeordnet ist. Nach einem nicht dargestellten Ausführungsbeispiel können das Netzteil und die zentrale Steuerung 42 gleichzeitig auch mehreren Gruppen von Kanalumsetzern 28 zugeordnet sein. Die Kanalumsetzer 28 sind an ihren Ausgängen 30 mit dem Sammelfeld 32 verbunden. Das Sammelfeld 32 kann als passives oder aktives Sammelfeld ausgebildet sein. Anstelle der zentralen Steuerung 42 ist es auch denkbar, jedem einzelnen Kanalumsetzer 28 eine separate Steuerung zuzuordnen. Auf die Funktion der Steuerung soll später noch eingegangen werden.

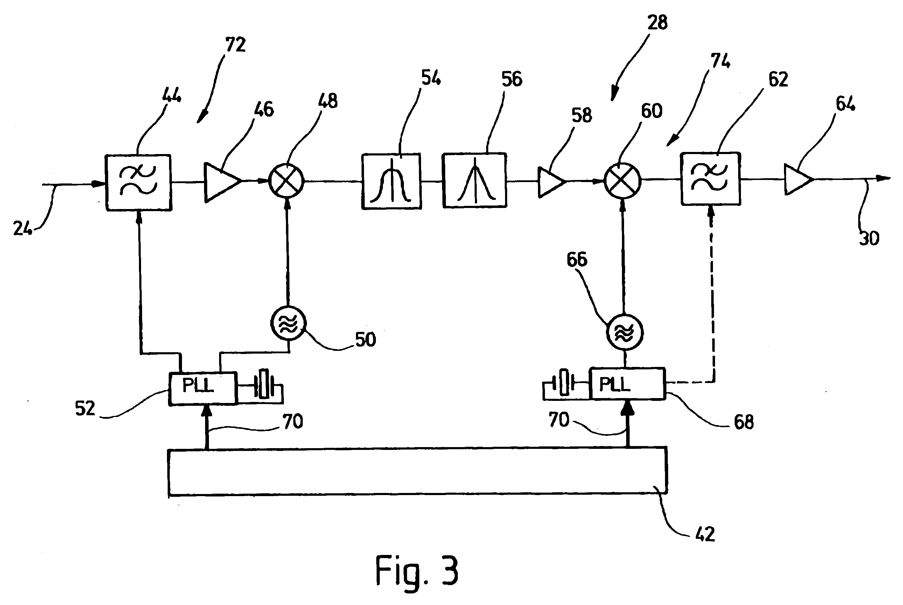

In der Figur 3 ist ein Blockschaltbild eines Kanalumsetzers 28 gezeigt. Dieses hier dargestellte Blockschaltbild einer Schaltungsanordnung ist in jedem der Kanalumsetzer 28 vorhanden. Die Schaltung weist einen ersten Tiefpaß 44 auf, der mit einem Verstärker 46 und einem ersten Frequenz-Mischer 48 in Reihe liegt. Der Frequenz-Mischer 48 ist weiterhin mit einem ersten Oszillator 50 verbunden, der von einer PLL (Phase-Locked-Loop)-Schaltung 52 gesteuert wird. Die PLL-Schaltung 52 steuert gleichzeitig den Tiefpaß 44 bzw. stimmt diesen ab. Der Tiefpaß 44 ist mit dem Eingang 24 des Kanalumsetzers 28 verbunden. Dar erste Frequenz-Mischer 48 ist mit einem Oberflächenwellen-Filter 54, einem konventionellen Filter 56, einem zweiten Verstärker 58 und einem zweiten Frequenz-Mischer 60 in Reihe geschaltet. Der Frequenz-Mischer 60 ist mit einem zweiten Tiefpaß 62 verbunden, der mit einem dritten Verstärker 64 in Reihe liegt. Der Ausgang des Verstärkers 64 bildet gleichzeitig den Ausgang 30 des Kanalumsetzers 28. Der zweite Frequenz-Mischer 60 ist weiterhin mit einem zweiten Oszillator 66 verbunden, der von einer zweiten PLL-Schaltung 68 gesteuert wird. Der zweite Tiefpaß 62 ist weiterhin mit der PLL-Schaltung 68 verbunden und kann von dieser gesteuert, das heißt, abgestimmt werden. Nach einem nicht dargestellten Ausführungsbeispiel kann auf die Anordnung des zweiten Tiefpasses 62 verzichtet werden. Weiterhin besteht die Möglichkeit, den Tiefpaß 62 mit einer festen Knickfrequenz anzuordnen, so daß auf dessen Abstimmbarkeit über die PLL-Schaltung 68 verzichtet werden kann.

Die in Figur 3 gezeigte Schaltung übt folgende allgemeine Funkion aus:

Am Eingang 24 liegt ein Eingangssignal mit einer Eingangs-Kanalfrequenz nach derzeitigem Stand im Bereich zwischen 950 bis 2050 MHz an. Dieses entsteht aus der breitbandigen Umsetzung durch die in Figur 1 dargestellte Empfangsanlage 12 aus der vom Satelliten abgestrahlten Originalfrequenz, die nach gegenwärtigem Stand bei 11 GHz liegt, in die ZF-Lage und nachfolgende Verteilung durch die Eingangsverteiler 18, 20 beziehungsweise 22 an deren Ausgänge 26. Das an dem Eingang 24 anliegende Eingangssignal wird mit einer von dem ersten Oszillator 50 bereitgestellten Frequenz, die beispielsweise im Bereich zwischen 1430 bis 2530 MHz liegt, mit dem ersten Frequenz-Mischer 48 auf eine Zwischenfrequenz von beispielsweise 479 MHz heruntergemischt. Der Verstärker 46 dient dabei einer Verbesserung des Rauschverhaltens des Signals und gemeinsam mit dem Tiefpaß 44 einer Unterdrückung von Störstrahlungen zum Eingang 24. Der Tiefpaß 44 und der Oszillator 50 sind dabei über die PLL-Schaltung 52 steuerbar, so daß alle der Vielzahl von Eingangs-Kanalfrequenzen am Eingang 24 eine gewünschte Frequenz herausgefiltert worden kann. Die Ansteuerung des Oszillators 50 erfolgt so, daß eine zu der herauszufilternden Eingangs-Kanalfrequenz passende Frequenz von dem Oszillator 50 bereitgestellt wird und diese gemeinsam in dem Frequenz-Mischer 48 gemischt werden. Über den Oberflächenwellenfilter 54 erfolgt eine Kanalfilterung, das heißt, es wird nur einer der gemischten Kanäle durchgelassen, während alle anderen Kanäle herausgefiltert worden. Durch den den Oberflächenwellenfilter nachgeschalteten Filter 56 erfolgt eine sogenannte Weitabselektion, das heißt, Bereiche neben den von den Oberflächenwellenfiltern durchgelassenen Kanälen werden weggefiltert. Die Zwischenfrequenz wird über den Frequenz-Mischer 60 mit einer von dem zweiten Oszillator 66 bereitgestellten Frequenz, die ebenfalls beispielsweise im Bereich zwischen 1430 bis 2530 MHz liegt, gemischt, so daß eine Ausgangs-Kanalfrequenz zur Verfügung steht, die einem ganz bestimmten Kanal entspricht und die über das Mischungsvernältnis der Zwischenfrequenz mit der vom Oszillator 66 bereitgestellten Frequenz wählbar ist. Insgesamt wird also mit dem Kanalumsetzer 28 erreicht, daß eine Eingangs-Kanalfrequenz selektiv empfangen wird und in den gleichen Frequenzbereich, aber mit einer neuen Ausgangs-Kanalfrequenz transponiert wird, ohne daß dabei eine Modulationsart der Kanalfrequenz geändert wird. Die PLL-Schaltungen 52 bzw. 68 können von der zentralen Steuerung 42 beispielsweise jeweils über einen hier angedeuteten I2C-Bus 70 kontrolliert werden. Somit wird also klar, daß in Abhängigkeit der Programmierung der zentralen Steuerung 42 aus jeder beliebigen Eingangs-Kanalfrequenz jede beliebige Ausgangs-Kanalfrequenz transponiert werden kann. Somit kann also bei einer der empfangenen Anzahl der von den Satelliten ausgestrahlten Kanäle entsprechenden Anzahl von Kanalumsetzern 28 jedes einzelne einem bestimmten Kanal zuzuordnende Eingangssignal mit einer Eingangs-Kanalfrequenz in ein frei wählbares Ausgangssignal mit einer bestimmten Ausgangs-Kanalfrequenz umgesetzt werden. Die Ausgangs-Kanalfrequenzen können dabei so gewählt werden, daß Kanäle mit gleicher oder fast gleicher Eingangs-Kanalfrequenz am Ausgang 30 in getrennten Ausgangs-Kanalfrequenzen vorliegen. Die Ausgangs-Kanalfrequenzen werden über die Ausgänge 30 der Kanalumsetzer 28 auf das Sammelfeld 32 geleitet und liegen dort somit quasi an einer Leitung an, die entweder über einen in dem Sammelfeld 32 angeordneten Verstärker (aktives Sammelfeld) direkt in ein Verteilernetz 38 eingespeist werden können. Die Sammelfelder 32 können auch als passive Sammelfelder ausgebildet sein, so daß beispielsweise mehrere Sammelfelder 32 auf eine Verstärkerstufe 36 geschaltet sind, von der dann die Einspeisung in das Verteilernetz 38 erfolgt.

Über die zentrale Steuerung 42 kann eine Auswahl der von den Satelliten empfangenen Kanäle erfolgen, indem beispielsweise bestimmte Kanäle von einer Umsetzung in den Kanalumsetzern 28 ausgeschlossen werden. Hierzu bedarf es lediglich einer entsprechenden Ansteuerung des Tiefpasses 44 und des Oszillators 50, so daß bestimmte Eingangs-Kanalfrequenzen nicht durchgelassen werden. der Tiefpaß 44, der Verstärker 46, der Frequenz-Mischer 48, der Oszillator 50 und die PLL-Schaltung 52 bilden gemeinsam eine Auswahleinrichtung 72 für die Eingangs-Kanalfrequenz und der Frequenz-Mischer 60, der Tiefpaß 62, der Oszillator 66 und die PLL-Schaltung 68 eine Auswahleinrichtung 74 für die Ausgangs-Kanalfrequenz. Der Tiefpaß 62 kann in einer ersten, nicht dargestellten Variante entfallen, wobei dann am Ausgang 30 Ausgangs-Kanalfrequenzen von über ca. 1400 MHz programmiert werden können. In einer zweiten Variante ist der Tiefpaß 62 fest ausgebildet, wobei eine Knickfrequenz des Tiefpasses 62 knapp unterhalb einer Anfangsfrequenz des Oszillators 66 liegt. Die Anfangsfrequenz des Oszillators 66 liegt im Beispiel bei 1430 MHz, so daß die Knickfrequenz bei ca. 1380 MHz liegen kann. In dieser Variante können an den Ausgang 30 Ausgangs-Kanalfrequenzen bis maximal zur Knickfrequenz, also 1380 MHz, programmiert werden. Der Tiefpaß 62 kann dabei auch außerhalb des Kanalumsetzers 28, beispielsweise im Sammelfeld 32, angeordnet sein. Für eine Kanalumsetzung der Eingangs-Kanalfrequenzen in den Bereichen zwischen 950 bis 2050 MHz sind dann Kanalumsetzer 28, die einen Tiefpaß 62 aufweisen und Kanalumsetzer 28, die keinen Tiefpaß 62 aufweisen, miteinander kombiniert, so daß bestimmte Kanalumsetzer 28 für bestimmte Ausgangs-Kanalfrequenzen zuständig sind. In der in Figur 3 gezeigten Variante, bei der der Tiefpaß 62 über die PLL-Schaltung 68 abstimmbar ist, ist der Ausgang 30 auf sämtliche mögliche Ausgangs-Kanalfrequenzen programmierbar, so daß auf unterschiedliche Kanalumsetzer 28 in einer Anlage 10 verzichtet werden kann.

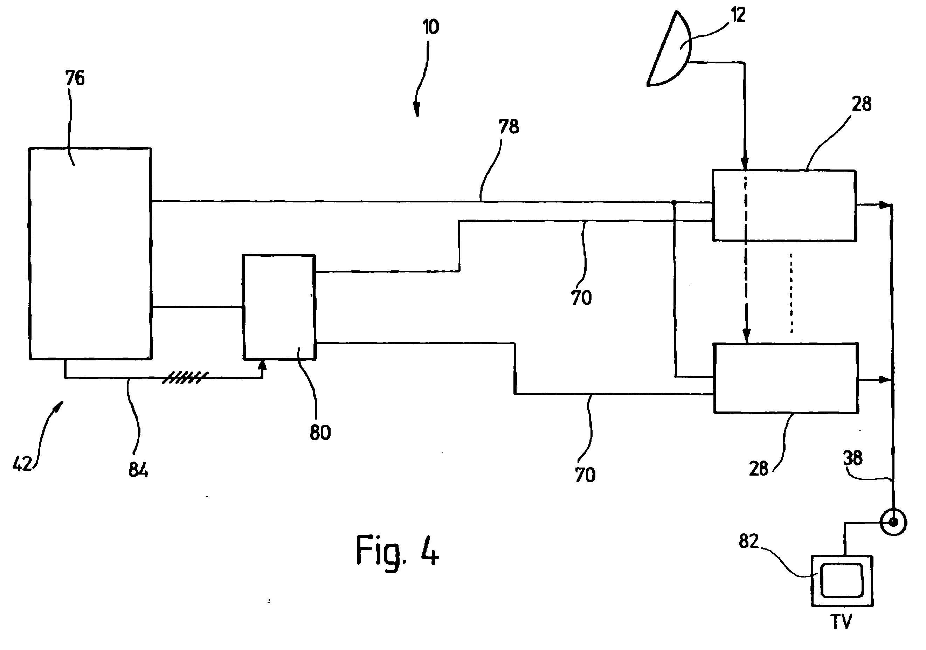

In Figur 4 ist nochmals eine Gesamtübersicht einer Anlage 10 dargestellt, wobei hier die zentrale Steuerung 42 hervorgehoben ist. Gleiche Teile wie in den vorhergehenden Figuren sind mit gleichen Bezugszeichen versehen und nicht nochmals erläutert. Die zentrale Steuerung 42 weist einen Controlerbaustein 76 auf, der über eine Clock-Leitung 78 mit allen zu der Anlage 10 gehörenden Kanalumsetzern 28 verbunden ist Die Kanalumsetzer 28 sind dabei parallelgeschaltet, so daß sie alle das gleiche Clock-Signal empfangen. Die Anzahl der zu der Anlage 10 gehörenden Kanalumsetzer 28 richtet sich nach der Anzahl der über die Satelliten zu empfangenden Kanäle oder nach der Anzahl der in das Verteilernetz 38 einzuspeisenden Anzahl von Kanälen. Die Anlage 10 besitzt beispielsweise insgesamt vierundzwanzig Kanalumsetzer 28. In Figur 4 ist hiervon lediglich ein erster Kanalumsetzer 28 und ein n-ter Kanalumsetzer 28 dargestellt. Die Kanalumsetzer 28 sind jeweils weiterhin über die hier angedeuteten Bus-Leitungen 70 mit einem Multiplexer-Baustein 80 der zentralen Steuerung 42 verbunden, über die die Daten für die jeweilige selektive Ansteuerung der einzelnen Kanalumsetzer 28 bereitgestellt werden. Der Controler-Baustein 76 ist dabei einprogrammierbar, wobei im Rahmen der Erfindung auf Einzelheiten der Einprogrammierung nicht weiter eingegangen werden soll, so daß über den Multiplexer-Baustein 80 jeder Kanalumsetzer 28 separat auf eine bestimmte Eingangs-Kanalfrequenz und eine bestimmte Ausgangs-Kanalfrequenz einprogrammiert werden kann. Die Verbindung zwischen dem Controler-Baustein 26 und dem Multplexer-Baustein 80 ist hier mit 84 angedeutet, wobei eine der Anzahl der anzusteuernden Kanalumsetzer 28 entsprechende Anzahl von Einzelverbindungen vorgesehen ist. Die zentrale Steuerung kann vorteilhafterweise so ausgelegt sein, daß in bestimmten Zyklen die einmal einprogrammierten Ansteuerungen für die einzelnen Kanalumsetzer 28 in festgelegten, frei wählbaren Zyklen an die Kanalumsetzer 28 neu ausgegeben werden, um bei irgendwelchen Störungen, beispielsweise Spannungsausfällen, die einmal vorgenommene Einprogrammierung der Kanalumsetzer 28 beibehalten zu können.

Insgesamt bietet sich mit der erfindungsgemäßen Anlage 10 der Vorteil, daß die Eingangssignale der einzelnen Kanäle mit bestimmten Eingangs-Kanalfrequenzen entsprechend frei wählbaren Anforderungen von an dem Verteilernetz 38, hier mit 82 angedeuteten Teilnehmern entsprechend ihren Bedürfnissen in Kanäle mit gegebenenfalls vollkommen anderen Ausgangs-Kanalfrequenzen neu geordnet werden können. Insgesamt besteht für die an die Anlage 10 angeschlossenen Teilnehmer 82 eine freie Auswahl durch entsprechende Einstellung der zentralen Steuerung 42 unter den einzuspeisenden Kanälen eines oder mehrerer Satelliten. Die Kanäle werden dabei in der originalen FM-Modulation übertragen, daß heißt, es findet keine Änderung der Modulationsart statt, so daß ein Informationsverlust, insbesondere bei beispielsweise Untertonträgern, Datenübertragungen, D2Mac, Scramblingverfahren oder Videokompression verhindert werden kann. Darüber hinaus ist die ansonsten nicht gemeinsame Übertragung von Kanälen verschiedener Satelliten durch deren teilweise horizontale oder vertikale Ausrichtung der Signale in einem Verteilernetz 38 möglich. Über die zentrale Steuerung 42 kann die Wahl einer Bandbreite der einzelnen Kanäle durch Programmierung der Kanalumsetzer 28 passend zum jeweiligen Übertragungssystem, das heißt passend zur Empfangseinrichtung 12 bzw. Verteilernetz 38, frei gewählt werden. Die Parameter der Steuerung 42 können über den Controler-Baustein 76 fest eingespeichert sein, sind jedoch bei Änderung der empfangenen Eingangs-Kanalfrequenz bzw. bei einer gewünschten Änderung der Ausgangs-Kanalfrequenz ohne weiteres umprogrammierbar. Entsprechend den an dem Verteilernetz 38 angeschlossenen Teilnehmern 82, deren Zahl an sich nicht begrenzt ist, können aus den über die Empfangseinrichtungen 12, 14 bzw. 16 von den Satelliten empfangenen Kanälen die Kanäle herausgefiltert werden, die für die angeschlossenen Teilnehmer 82 technisch nicht empfangbar bzw. uninteressant sind. Dies können beispielsweise fremdsprachige Programme auf verschiedenen Kanälen oder codierte Programme auf verschiedenen Kanälen sein. Letztendlich können die angeschlossenen Teilnehmer 82 durch den Einsatz verschiedener Endgeräte, beispielsweise TV-Geräte, Audio-Geräte oder Datenempfangsgeräte, das durch die Kanalumsetzer 28 durchgelassene und auf dem Verteilernetz 38 neu verteilte Spektrum verschiedener Kanäle selbst bestimmen.

## Patentansprüche

1. Anordnung zur Kanalumsetzung von mit einer Empfangsanlage für von mindestens einem Satelliten empfangenen und in Satelliten-Zwischenfrequenzen (ZF-Lage) umgesetzten Frequenzbereichen, **dadurch gekennzeichnet**, daß jede beliebige empfangene Eingangs-Kanalfrequenz (ZF-Frequenz) ohne Änderung ihrer Modulationsart auf jede beliebige Ausgangs-Kanalfrequenz transponierbar ist.

2. Anordnung nach Anspruch 1, **dadurch gekennzeichnet**, daß die Anlage (10) für jede Eingangs-Kanalfrequenz einen steuerbaren Kanalumsetzer (28) aufweist.

3. Anordnung noch einem der vorhergehenden Ansprüche, **dadurch gekennzeichnet**, daß die Kanalumsetzer (28) mit ihren Eingängen (24) mit einem jedem Satelliten zugeordneten Eingangsverteiler (18, 20, 22) und mit ihren Ausgängen (30) mit wenigstens einem Sammelfeld (32) verbunden sind.

4. Anordnung nach einem der vorhergehenden Ansprüche, **dadurch gekennzeichnet**, daß die Kanalumsetzer (28) eine mit einer zentralen Steuerung (42) verbundene Schaltung aufweisen, die eine Auswahleinrichtung (72) für die Eingangs-Kanalfrequenz und eine Auswahleinrichtung (74) für die Ausgangs-Kanalfrequenz aufweist.

5. Anordnung nach einem der vorhergehenden Ansprüche, **dadurch gekennzeichnet**, daß die Auswahleinrichtungen (72, 74) programmierbar sind.

6. Anordnung nach einem der vorhergehenden Ansprüche, **dadurch gekennzeichnet**, daß mehrere, einem Satelliten zugeordnete Kanalumsetzer (28) ein Modul bilden, wobei mehrere, verschiedenen Satelliten zugeordnete Module auf wenigstens ein Sammelfeld (32) schaltbar sind.

7. Anordnung nach einem der vorhergehenden Ansprüche, **dadurch gekennzeichnet**, daß die Sammelfelder (32) mit ihren Sammelleitungen (34) mit einer Verstärkerstufe (36) verbunden sind, deren Ausgang über wenigstens ein Verteilernetz (38) zu an dieses angeschlossenen Teilnehmern (82) führt.
